# EUROPEAN PATENT SPECIFICATION

(11) **EP 1 619 746 B1**
(45) Date of publication and mention of the grant of the patent: **06.01.2010**
(21) Application number: 05015649.6
(22) Date of filing: 19.07.2005
(51) Int. Cl.: H01Q 1/12

(54) **Antenna mount for mobile terminal**
Antennenträger für mobile Endeinrichtungen
Monture d'antenne pour terminal mobile

(30) Priority: 21.07.2004 KR 2004056918
(43) Date of publication of application: 25.01.2006
(73) Proprietor: LG Electronics, Inc., Seoul 150-721 (KR)
(72) Inventor: Kang, Dong-Gook, Jamwon-Dong Seocho-Gu Seoul (KR)
(74) Representative: Beyer, Andreas

(56) References cited:
- WO-A-01/05049
- WO-A-02/11303
- US-B1- 6 622 031

## Description

### BACKGROUND OF THE INVENTION

### 1. Field of the Invention

The present invention relates generally to an antenna mount and, more particularly, to an antenna mount for a mobile terminal.

### 2. Description of the Related Art

A mobile terminal may receive and transmit voice and data, such as data associated with wireless internet. Digital multimedia broadcasting (DMB), a system for receiving a broadcast is being studied. In the DMB system, a first antenna for receiving a broadcast and a second antenna for receiving voice must be separately mounted to the mobile terminal. For reliable radio transmission and reception, the antenna for receiving a broadcast must have a diameter of at least 15 mm and a length of at least 70mm. Thus, inclusion of the antenna for receiving a broadcast may significantly increase the overall size of the mobile terminal.

Document WO 01/05049 A1 concerns a detachable supplementary apparatus for a portable communication device. Upon removal of the original antenna of the communication device, the apparatus including an extendable antenna may be attached to the communication device.

Document US 6,622,031 B1 concerns a hand-held wireless device comprising a rotatable antenna and a stylus element. The stylus element is located in a molded stylus holder. Upon removal of the stylus element, an antenna may rotate from an attached location to an extended location.

Document WO 02/11303 A2 concerns a mobile telephone holding device. The device comprises an antenna, which may be alternatively used upon insertion of a mobile telephone into the device.

Document WO 98/33231 concerns an antenna for a radio transmitter and receiver. The antenna is coupled to an integral type support portion. The antenna may be rotated around the integral type support portion.

### SUMMARY OF THE INVENTION

Accordingly, the present invention is directed to an antenna mount that substantially obviates one or more problems due to limitations and disadvantages of the related art.

An object of the present invention is to provide an antenna mount to facilitate detachable mounting of an antenna to a mobile terminal, and a mobile terminal having the same.

Another object of the present invention is to provide an antenna mount to facilitate control of a reception angle of the antenna mounted to the mobile terminal, and a mobile terminal having the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an antenna mounting device for a mobile terminal having the features of claim 1 and a mobile terminal having the features of claim 11 is provided.

In one embodiment, an antenna mounting device for a mobile terminal comprises a cradle configured to detachably install to the mobile terminal and a rotary bar rotatably coupled to the cradle, configured to rotate with respect to the cradle. The antenna mounting device also comprises an antenna coupled to the rotary bar, configured to rotate with the rotary bar. The rotation of the antenna is configured to control a reception angle of the antenna. The antenna mounting device may further comprise stopping protrusions formed on the cradle, configured to mate with stopping grooves formed in the mobile terminal to fix the cradle to the mobile terminal.

The antenna mounting device may further comprise a cover detachably installed at a rear side of the cradle, the rotary bar installed in a space between the cradle and the cover, the rotary bar configured to rotate in the space between the cradle and the cover. The antenna mounting device may further comprise guiding grooves consecutively formed at consecutive inner circumferential surfaces of the cradle and the cover in a circumferential direction, and guiding protrusions corresponding to the guiding grooves consecutively formed at an outer circumferential surface of the rotary bar in a circumferential direction. The antenna mounting device may further comprise indicator protrusions formed in a guiding groove of the guiding grooves, and indicator grooves corresponding to the indicator protrusions formed on a guiding protrusion of the guiding protrusions.

The indicator protrusions may be configured to mate with the indicator grooves as the antenna is rotated to provide an indication to a user of relative orientation of the antenna. The antenna mounting device may further comprise a stopping jaw formed at an end of a guiding groove of the guiding grooves, and a stopper formed at an end of a guiding protrusion of the guiding protrusions, corresponding to the stopping jaw. The stopping jaw may be configured to mate with the stopper as the antenna is rotated to restrict rotation of the antenna. The cover may be coupled to the cradle by a fastener, such as a screw.

The antenna mounting device may further comprise first holding portions formed at four corners of the cradle, configured to mount the cradle to the mobile terminal. The antenna mounting device may further comprise a second holding portion formed at one side of the cradle, configured to hold a second antenna. The antenna mounting device may further comprise cut-out portions formed at both sides of a middle portion of the cradle.

In another embodiment, an antenna mounting device for a mobile terminal comprises a cradle configured to be installed to the mobile terminal and an antenna coupled to a rotary bar. The rotary bar is rotatably coupled to the cradle and configured to rotate within a certain angle range.

In yet another embodiment, a mobile terminal having an antenna mount comprises a mobile terminal body comprising mobile terminal circuitry and a cradle detachably installed to the mobile terminal body. The mobile terminal also comprises an antenna coupled to a rotary bar, the rotary bar being rotatably coupled to the cradle and configured to rotate within a certain angle range. The antenna may be integrally formed with the rotary bar.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.
FIG. 1 is a perspective view showing a mobile terminal having an antenna mount, according to an embodiment of the present invention.
FIG. 2 is a disassembled perspective view showing the antenna mount for the mobile terminal, according to an embodiment of the present invention.
FIG. 3 is a perspective view showing a front surface of a cradle for the antenna mount, according to an embodiment of the present invention.
FIG. 4 is a perspective view showing a front surface of a cover for the antenna mount, according to an embodiment of the present invention.
FIG. 5 is a sectional view taken along line I-I in FIG. 1.
FIG. 6 is a sectional view taken along line II-II in FIG. 1.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

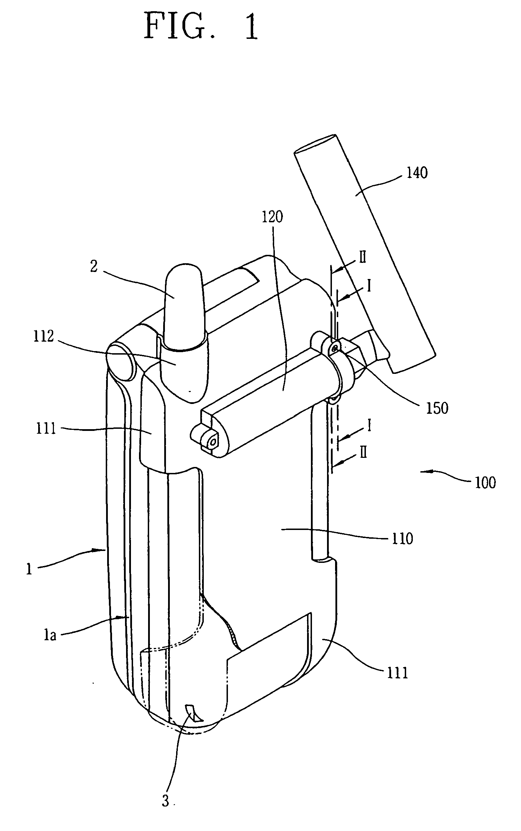

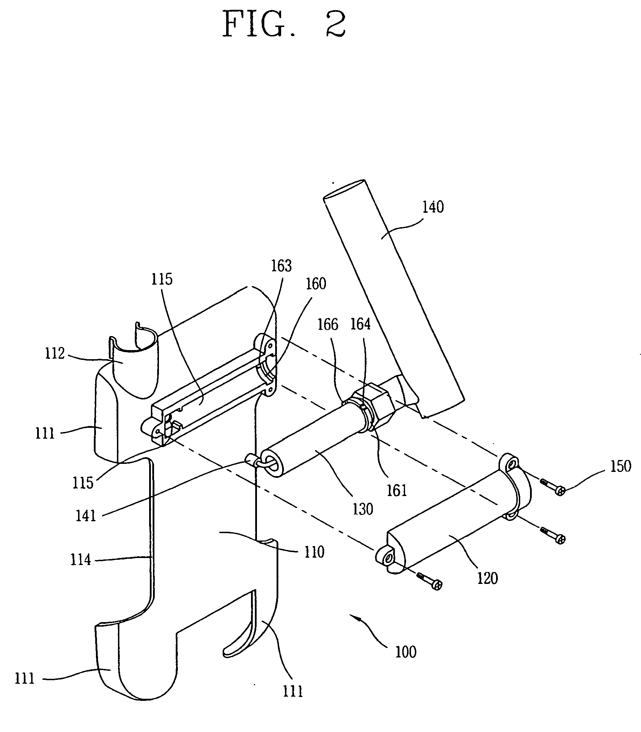

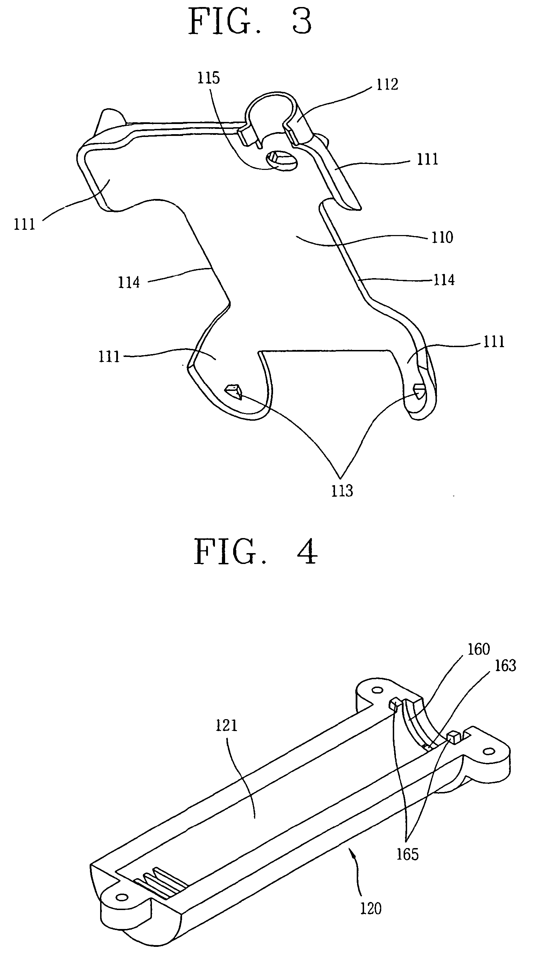

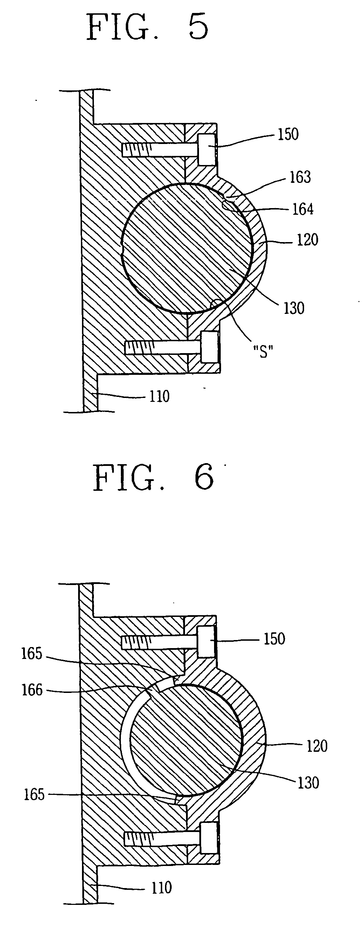

An antenna mount for a mobile terminal according to the present invention is described below with reference to FIGS. 1-6. FIG. 1 is a perspective view showing a mobile terminal having an antenna mount, according to an embodiment of the present invention. FIG. 2 is a disassembled perspective view showing the antenna mount for the mobile terminal, according to an embodiment of the present invention. FIG. 3 is a perspective view showing a front surface of a cradle for the antenna mount, according to an embodiment of the present invention. FIG. 4 is a perspective view showing a front surface of a cover for the antenna mount, according to an embodiment of the present invention. FIG. 5 is a sectional view taken along line I-I in FIG. 1. FIG. 6 is a sectional view taken along line II-II in FIG. 1.

Referring to FIGS. 1-6, a mobile terminal 1 having an antenna mount 100 comprises a mobile terminal body 1a, a cradle 110 installed to the body 1a, a cover 120 installed at an rear surface of the cradle 110, and an antenna 140, having a rotary bar 130 installed in a space S, shown in FIG. 5, between the cradle 110 and the cover 120 to allow rotation of the antenna 140 within a certain angle range. The antenna 140 may preferably be configured to receive broadcasting, such as digital multimedia broadcasting (DMB), for example.

First holding portions 111 for mounting the cradle 110 to the mobile terminal 1 are preferably formed at four corners of the cradle 110. A second holding portion 112 for holding a second antenna 2 is formed at one side of the cradle 110. The second antenna 2 may preferably be configured for voice communication, for example. In one embodiment, the first holding portions 111 formed at lower corners on both sides of the cradle 110 are provided with stopping protrusions 113. The stopping protrusions 113 correspond to stopping grooves 3 formed at both ends of the mobile terminal 1. Cut-out portions 114 may be formed on both sides of a middle portion of the cradle 110. The cut-out portions 114 may make the cradle 110 more compact and provide an elastic force to each first holding portion 111 so that each first holding portion 111 may be elastically coupled to the four corners of the mobile terminal 1.

In operation, when a user affixes the cradle 110 to a rear surface of the mobile terminal 1, the first holding portions 111 formed at the four corners of the cradle 110 are affixed to the four corners of the mobile terminal 1. The second holding portion 112 holds the second antenna 2, thereby strengthening the coupling between the cradle 110 and the mobile terminal 1.

A first round portion 115 is formed at a rear surface of the cradle 110 and a second round portion 121 is formed in the cover 120 for insertion of the rotary bar 130. The first round portion 115 and the second round portion 121 may preferably have the same inner circumferential diameter. The cover 120 is detachably coupled to a rear surface of the cradle 110 by a general coupling device, such as, a screw 150. The rotary bar 130 of the antenna 140 is rotatably inserted into the space S between the first round portion 115 and the second round portion 121.

The rotary bar 130 may preferably be an extension from one end of the antenna 140. That is, the rotary bar 130 and the antenna 140 may be of a one-piece construction. The rotary bar 130 facilitates rotation of the antenna 140 in order to control a reception angle of the antenna 140.

Guiding grooves 160 are consecutively formed at each inner circumferential surface of the first round portion 115 and the second round portion 121 in a circumferential direction, and guiding protrusions 161 corresponding to the guiding grooves 160 are consecutively formed at an outer circumferential surface of the rotary bar 130 in a circumferential direction.

In another embodiment, when the rotary bar 130 is rotated to a certain angle in order to control a reception angle of the antenna 140, the guiding protrusion 161 formed at the outer circumferential surface of the rotary bar 130 is rotated in a circumferential direction while inserted into the guiding groove 160.

Accordingly, the rotary bar 130 is rotated and the reception angle of the antenna 140 is controlled.

Click protrusions (indicator protrusions) 163 may be formed at evenly spaced intervals in the guiding groove 160, and click grooves (indicator grooves)164 corresponding to the click protrusions 163 may be formed on the guiding protrusion 161 at the evenly spaced intervals of the click protrusions 163.

Accordingly, when the antenna 140 is rotated in order to control the reception angle thereof, the rotary bar 130 integrally formed with the antenna 140 is rotated. Since each click protrusion 163 fits into each click groove 164, the user may sense a 'click' when rotating the antenna 140. By rotation of the antenna 140, the reception angle of the antenna 140 may be maintained.

A stopping jaw 165 is formed at the end of the guiding groove 160, and a stopper 166 corresponding to the stopping jaw 165 is formed at the end of the guiding protrusion 161. A hole 115 for inserting an antenna jack into the mobile terminal 1 is formed at a middle portion of the cradle 110, and a terminal 141 of the antenna 140 may be detachably connected to the antenna jack.

In yet another embodiment, the rotary bar 130 is rotatably coupled to the cradle 110 without use of a cover (e.g., cover 120), to allow rotation of the antenna 140. For example, the rotary bar 130 may be rotatably coupled to the cradle 110 using a prong-type fastener. That is, in this example, the rotary bar 130 may be 'snapped' into the prong-type fastener, allowing for rotation of the antenna 140.

An operation of the antenna 140 in a mobile terminal according to the present invention 140 is described below. To use the antenna 140, the cradle 110 is affixed to the rear surface of the mobile terminal 1. Since the first holding portions 111 formed at the four corners of the cradle 110 hold the four corners of the mobile terminal 1, the cradle 110 may be firmly coupled to the rear surface of the mobile terminal 1. The second holding portion 112 holds the antenna 2, which in turn strengthens the coupling between the cradle 110 and the mobile terminal 1.

Furthermore, the stopping protrusions 113 formed at the inner surface of the cradle 110 are elastically coupled to the stopping grooves 3 formed at the rear surface of the mobile terminal 1. Therefore, the cradle 110 and the antenna 140 mounted to the cradle 110 may be firmly coupled to the mobile terminal 1.

Once the antenna 140 is mounted to the cradle 110, to control a reception angle of the antenna 140, the user rotates the antenna 140. The rotary bar 130 is integrally formed at one end of the antenna 140 thus rotates in the space S formed between the cradle 110 and the cover 120. The reception angle of the antenna 140 is thereby controlled. When the rotary bar 130 of the antenna 140 is rotated, the click protrusions 163 are consecutively inserted into the click grooves 164.

Accordingly, the user may sense 'clicks' as the antenna 140 is rotated, thereby allowing the reception angle of the antenna 140 to be uniformly maintained. Furthermore, when the rotary bar 130 of the antenna 140 is rotated, the antenna 140 must be rotated within a certain angle range to prevent damage to the antenna 140. Therefore, when the rotary bar 130 of the antenna 140 is rotated beyond the certain angle range, the stopper 166 is stopped by the stopping jaw 165, thereby stopping the rotation of the antenna 140.

To detach the antenna 140 from the mobile terminal 1, the cradle 110 is pulled away from the mobile terminal 1 so that the stopping protrusions 113 are detached from the stopping grooves 3, the first holding portions 111 are detached from the four corners of the mobile terminal 1, and the second holding portion 112 are detached from the antenna 2. The detached antenna 140 may be separately stored and reused by being remounted to the mobile terminal 1, as necessary.

In one embodiment, an antenna mounting device for a mobile terminal comprises a cradle configured to detachably install to the mobile terminal and a rotary bar rotatably coupled to the cradle, configured to rotate with respect to the cradle. The antenna mounting device also comprises an antenna coupled to the rotary bar, configured to rotate with the rotary bar. The rotation of the antenna is configured to control a reception angle of the antenna. The antenna mounting device may further comprise stopping protrusions formed on the cradle, configured to mate with stopping grooves formed in the mobile terminal to fix the cradle to the mobile terminal.

The antenna mounting device may further comprise a cover detachably installed at a rear side of the cradle, the rotary bar installed in a space between the cradle and the cover, the rotary bar configured to rotate in the space between the cradle and the cover. The antenna mounting device may further comprise guiding grooves consecutively formed at consecutive inner circumferential surfaces of the cradle and the cover in a circumferential direction, and guiding protrusions corresponding to the guiding grooves consecutively formed at an outer circumferential surface of the rotary bar in a circumferential direction. The antenna mounting device may further comprise indicator protrusions formed in a guiding groove of the guiding grooves, and indicator grooves corresponding to the indicator protrusions formed on a guiding protrusion of the guiding protrusions.

The indicator protrusions may be configured to mate with the indicator grooves as the antenna is rotated to provide an indication to a user of relative orientation of the antenna. The antenna mounting device may further comprise a stopping jaw formed at an end of a guiding groove of the guiding grooves, and a stopper formed at an end of a guiding protrusion of the guiding protrusions, corresponding to the stopping jaw. The stopping jaw may be configured to mate with the stopper as the antenna is rotated to restrict rotation of the antenna. The cover may be coupled to the cradle by a fastener, such as a screw.

The antenna mounting device may further comprise first holding portions formed at four corners of the cradle, configured to mount the cradle to the mobile terminal. The antenna mounting device may further comprise a second holding portion formed at one side of the cradle, configured to hold a second antenna. The antenna mounting device may further comprise cut-out portions formed at both sides of a middle portion of the cradle.

In another embodiment, an antenna mounting device for a mobile terminal comprises a cradle configured to be installed to the mobile terminal and an antenna coupled to a rotary bar. The rotary bar is rotatably coupled to the cradle and configured to rotate within a certain angle range.

In yet another embodiment, a mobile terminal having an antenna mount comprises a mobile terminal body comprising mobile terminal circuitry and a cradle detachably installed to the mobile terminal body. The mobile terminal also comprises an antenna coupled to a rotary bar, the rotary bar being rotatably coupled to the cradle and configured to rotate within a certain angle range. The antenna may be integrally formed with the rotary bar.

The present invention provides an antenna mount for a mobile terminal in which the cradle may be easily attached to the rear surface of the mobile terminal in order to receive a broadcast. Conversely, the cradle may be easily detached from the rear surface of the mobile terminal when the antenna is not needed.

Therefore, an antenna of a relatively large size may be mounted to the mobile terminal for broadcast reception, but removed for storage so that the overall size of the mobile terminal is reduced.

Although the present invention is described with reference to digital multimedia broadcasting (DMB), the antenna of the present invention may be used in conjunction with any type of broadcasting or multicasting system.

## Claims

1. An antenna mounting device (100) for a mobile terminal (1), the antenna mounting device (100) comprising:
a cradle (110) configured to be detachably installed to the mobile terminal (1); **characterized by**
a cover (120) detachably mounted at a rear side of the cradle (110); and
an antenna (140) coupled to a rotary bar (130) and configured to rotate with the rotary bar, the rotary bar (130) being rotatably installed in a space (S) formed
between the cradle (110) and the cover (120), wherein the rotation of the antenna is configured to control a reception angle of the antenna; the antenna being configured to receive broadcasting such as Digital Multimedia Broadcasting.

2. The antenna mounting device of claim 1, further comprising:
stopping protrusions (113) formed on the cradle (110), configured to mate with stopping grooves (3) formed in the mobile terminal (1) to fix the cradle (110) to the mobile terminal (1).

3. The antenna mounting device of claim 1, further comprising:
guiding grooves (160) consecutively formed at consecutive inner circumferential surfaces of the cradle (110) and the cover (120) in a circumferential direction; and
guiding protrusions (161) corresponding to the guiding grooves (160) consecutively formed at an outer circumferential surface of the rotary bar (130) in a circumferential direction.

4. The antenna mounting device of claim 3, further comprising:
indicator protrusions (163) formed in a guiding groove of the guiding grooves (160); and
indicator grooves (164) corresponding to the indicator protrusions (163) formed on the guiding protrusion (161) at evenly spaced intervals of the indicator protrusions (163);
wherein, the indicator protrusions (163) are configured to mate with the indicator grooves (164) as the antenna (140) is rotated to provide an indication to a user of relative orientation of the antenna (140).

5. The antenna mounting device of claim 3, further comprising:
a stopping jaw (165) formed at an end of a guiding groove of the guiding grooves (160); and
a stopper (166) formed at an end of a guiding protrusion of the guiding protrusions (161), corresponding to the stopping jaw (165);
wherein, the stopping jaw (165) is configured to mate with the stopper (166) as the antenna (140) is rotated to restrict rotation of the antenna (140).

6. The antenna mounting device of claim 1, wherein the cover (120) is coupled to the cradle (110) by a fastener.

7. The antenna mounting device of claim 1, further comprising:
first holding portions (111) formed at four corners of the cradle (110), configured to mount the cradle (110) to the mobile terminal (1).

8. The antenna mounting device of claim 7, further comprising:
a second holding portion (112) formed at one side of the cradle (110), configured to hold a second antenna (2) of the mobile terminal.

9. The antenna mounting device of claim 7, further comprising:
cut-out portions (114) formed at both sides of a middle portion of the cradle (110).

10. A mobile terminal (1) comprising:
a mobile terminal body having mobile terminal circuitry and a second antenna (2) for voice communication; and
an antenna mounting device according to any one of the preceding claims.

11. The mobile terminal of claim 10, further comprising:
stopping protrusions (113) formed on the cradle (110), configured to mate with stopping grooves (3) formed in the mobile terminal (1) to fix the cradle (110) to the mobile terminal.

12. The mobile terminal of claim 10, wherein said antenna (140) is integrally formed with the rotary bar (130).

## Patentansprüche

1. Antennen-Befestigungsvorrichtung (100) für ein mobiles Endgerät (1), wobei die Antennen-Befestigungsvorrichtung (100) aufweist:
eine Schale (110), die dazu eingerichtet ist, lösbar an dem mobilen Endgerät (1) angebracht zu werden, **gekennzeichnet durch**
eine Abdeckung (120), die lösbar an einer Rückseite der Schale (110) angebracht ist, und
eine Antenne (140), die mit einem Drehstab (130) gekoppelt und dazu eingerichtet ist, sich mit dem Drehstab zu drehen, wobei der Drehstab (130) drehbar in einem zwischen der Schale (110) und der Abdeckung (120) gebildeten Raum (S) eingebaut ist, wobei **durch** die Drehung der Antenne ein Empfangswinkel der Antenne gesteuert werden kann, und wobei die Antenne dazu eingerichtet ist, Rundfunk wie etwa Digital Multimedia Broadcasting zu empfangen.

2. Antennen-Befestigungsvorrichtung nach Anspruch 1, ferner aufweisend:
Haltevorsprünge (113), die auf der Schale (110) ausgebildet und dazu eingerichtet sind, in Haltefugen (3) zu greifen, die in dem mobilen Endgerät (1) zum Befestigen der Schale (110) an dem mobilen Endgerät (1) ausgebildet sind.

3. Antennen-Befestigungsvorrichtung nach Anspruch 1, ferner aufweisend:
Führungsnuten (160), die fortlaufend in einer Umfangsrichtung an fortlaufenden inneren Umfangsoberflächen der Schale (110) und der Abdeckung (120) gebildet sind, und
Führungsvorsprünge (161), die mit den Führungsnuten (160) korrespondieren und fortlaufend in einer Umfangsrichtung an einer äußeren Umfangsoberfläche des Drehstabs (130) gebildet sind.

4. Antennen-Befestigungsvorrichtung nach Anspruch 3, ferner aufweisend:
Indikatorvorsprünge (163), die in einer Führungsnut der Führungsnuten (160) ausgebildet sind, und
Indikatornuten (164), die mit den Indikatorvorsprüngen (163) korrespondieren und mit den gleichen Abständen der Indikatorvorsprünge (163) auf dem Führungsvorsprung (161) ausgebildet sind,
wobei die Indikatorvorsprünge (163) dazu eingerichtet sind, beim Drehen der Antenne in die Indikatornuten (164) zu greifen, um einem Nutzer einen Anhaltspunkt hinsichtlich einer relativen Ausrichtung der Antenne (140) zu geben.

5. Antennen-Befestigungsvorrichtung nach Anspruch 3, ferner aufweisend
eine Haltebacke (165), die an einem Ende einer Führungsnut der Führungsnuten (160) gebildet ist, und
einen Stopper (166), der an einem Ende eines Führungsvorsprungs der Führungsvorsprünge (161) gebildet ist und mit dem Haltebacken (165) korrespondiert,
wobei der Haltebacken (165) dazu eingerichtet ist, beim Drehen der Antenne (140) mit dem Stopper (166) zusammenzuwirken, um eine Drehung der Antenne (140) zu begrenzen.

6. Antennen-Befestigungsvorrichtung nach Anspruch 1, bei der die Abdeckung (120) durch ein Befestigungselement mit der Schale (110) verbunden ist.

7. Antennen-Befestigungsvorrichtung nach Anspruch 1, ferner aufweisend
erste Halteabschnitte (111), die an vier Ecken der Schale (110) gebildet und dazu eingerichtet sind, die Schale (110) an dem mobilen Endgerät (1) anzubringen.

8. Antennen-Befestigungsvorrichtung nach Anspruch 7, ferner aufweisend:
einen zweiten Halteabschnitt (112), der an einer Seite der Schale (110) gebildet und dazu eingerichtet ist, eine zweite Antenne (2) des mobilen Endgeräts zu halten.

9. Antennen-Befestigungsvorrichtung nach Anspruch 7, ferner aufweisend:
Aussparungen (114), die an beiden Seiten eines mittleren Abschnitts der Schale (110) gebildet sind.

10. Mobiles Endgerät (1) aufweisend:
einen Mobiles-Endgerät-Körper mit Mobiles-Endgerät-Schaltungen und einer zweiten Antenne (2) für Sprachkommunikation, und
eine Antennen-Befestigungsvorrichtung nach einem der vorhergehenden Ansprüche.

11. Mobiles Endgerät nach Anspruch 10, ferner aufweisend:
Haltevorsprünge (113), die auf der Schale (110) ausgebildet und dazu eingerichtet sind, in Haltefugen (3) zu greifen, die in dem mobilen Endgerät (1) ausgebildet sind, um die Schale (110) an dem mobilen Endgerät zu befestigen.

12. Mobiles Endgerät nach Anspruch 10, bei dem die Antenne (140) integral mit dem Drehstab (130) ausgebildet ist.

## Revendications

1. Dispositif de montage d'antenne (100) pour un terminal mobile (1), le dispositif de montage d'antenne (100) comprenant :
un berceau (110) configuré pour être installé de façon détachable sur le terminal mobile (1) ;
**caractérisé par**
un capot (120) monté de façon détachable au niveau d'un côté arrière du berceau (110) ; et
une antenne (140) couplée à une barre rotative (130) et configurée pour tourner avec la barre rotative, la barre rotative (130) étant installée de façon rotative dans un espace (S) formé entre le berceau (110) et le capot (120),
dans lequel la rotation de l'antenne est configurée pour commander un angle de réception de l'antenne ; l'antenne étant configurée pour recevoir une diffusion telle qu'une Diffusion Multimédia Numérique.

2. Dispositif de montage d'antenne selon la revendication 1, comprenant en outre :
des saillies d'arrêt (113) formées sur le berceau (110), configurées pour s'ajuster avec des rainures d'arrêt (3) formées dans le terminal mobile (1) pour fixer le berceau (110) sur le terminal mobile (1).

3. Dispositif de montage d'antenne selon la revendication 1, comprenant en outre :
des rainures de guidage (160) formées de façon consécutive au niveau de surfaces circonférentielles intérieures consécutives du berceau (110) et du capot (120) dans une direction circonférentielle ; et
des saillies de guidage (161) correspondant aux rainures de guidage (160) formées de façon consécutive au niveau d'une surface circonférentielle extérieure de la barre rotative (130) dans une direction circonférentielle.

4. Dispositif de montage d'antenne selon la revendication 3, comprenant en outre :
des saillies d'indicateur (163) formées dans une rainure de guidage parmi les rainures de guidage (160) ; et des rainures d'indicateur (164) correspondant aux saillies d'indicateur (163) formées sur la saillie de guidage (161) à intervalles régulièrement espacés des saillies d'indicateur (163) ;
dans lequel les saillies d'indicateur (163) sont configurées pour s'ajuster avec les rainures d'indicateur (164) lorsque l'antenne (140) est fait tourner pour donner à un utilisateur une indication de l'orientation relative de l'antenne (140).

5. Dispositif de montage d'antenne selon la revendication 3, comprenant en outre :
une mâchoire d'arrêt (165) formée au niveau d'une extrémité d'une rainure de guidage parmi les rainures de guidage (160) ; et
une butée d'arrêt (166) formée au niveau d'une extrémité d'une saillie de guidage parmi les saillies de guidage (161), correspondant à la mâchoire d'arrêt (165) ;
dans lequel la mâchoire d'arrêt (165) est configurée pour s'ajuster avec la butée d'arrêt (166) lorsque l'antenne (140) est fait tourner pour limiter la rotation de l'antenne (140).

6. Dispositif de montage d'antenne selon la revendication 1, dans lequel le capot (120) est couplé au berceau (110) par un système de fixation.

7. Dispositif de montage d'antenne selon la revendication 1, comprenant en outre :
des premières parties de maintien (111) formées au niveau des quatre coins du berceau (110), configurées pour monter le berceau (110) sur le terminal mobile (1).

8. Dispositif de montage d'antenne selon la revendication 7, comprenant en outre :
une deuxième partie de maintien (112) formée au niveau d'un côté du berceau (110), configurée pour maintenir une deuxième antenne (2) du terminal mobile.

9. Dispositif de montage d'antenne selon la revendication 7, comprenant en outre :
des parties découpées (114) formées au niveau des deux côtés d'une partie médiane du berceau (110).

10. Terminal mobile (1) comprenant :
un corps de terminal mobile ayant un circuit de terminal mobile et une deuxième antenne (2) pour une communication vocale ; et
un dispositif de montage d'antenne selon l'une quelconque des revendications précédentes.

11. Terminal mobile selon la revendication 10, comprenant en outre :
des saillies d'arrêt (113) formées sur le berceau (110), configurées pour s'ajuster avec des rainures d'arrêt (3) formées dans le terminal mobile (1) pour fixer le berceau (110) au terminal mobile.

12. Terminal mobile selon la revendication 10, dans lequel ladite antenne (140) est formée de façon intégrale avec la barre rotative (130).
